# EUROPÄISCHE PATENTSCHRIFT

(11) **EP 3 621 437 B1**
(45) Veröffentlichungstag und Bekanntmachung des Hinweises auf die Patenterteilung: **12.07.2023**
(21) Anmeldenummer: 18723524.7
(22) Anmeldetag: 09.05.2018
(51) Int. Cl.: A01N 57/20, A01N 25/06, A01N 25/30, A01P 13/00

(54) **VERWENDUNG VON N-ALKYLGLUCAMIDEN ZUR VERMINDERUNG DER DRIFT BEI DER APPLIKATION VON GLUFOSINAT ENTHALTENDEN PFLANZENBEHANDLUNGSMITTELN**
USE OF N-ALKYL GLUCAMIDES FOR REDUCING DRIFT DURING THE APPLICATION OF GLUFOSINATE-CONTAINING PLANT TREATMENT AGENTS
UTILISATION DE N-ALKYLGLUCAMIDES POUR RÉDUIRE LA DÉRIVE, LORS DE LEUR APPLICATION, DES PRODUITS PHYTOSANITAIRES CONTENANT DU GLUFOSINATE

(30) Priorität: 12.05.2017 DE 102017004616
(43) Veröffentlichungstag der Anmeldung: 18.03.2020
(73) Patentinhaber: Clariant International Ltd, 4132 Muttenz (CH)
(72) Erfinder: BAUER, Martin, 65817 Eppstein (DE); BAUR, Peter, 86938 Schondorf (DE)
(74) Vertreter: Paczkowski, Marcus
(86) Internationale Anmeldenummer: PCT/EP2018/062069
(87) Internationale Veröffentlichungsnummer: WO 2018/206676

(56) Entgegenhaltungen:
- EP-A1- 3 064 062
- WO-A1-2014/067663
- WO-A1-2016/050782
- US-A1- 2017 055 524

## Beschreibung

Die Erfindung betrifft die Verwendung von bestimmten N-Alkylglucamiden als driftreduzierende Komponenten in Glufosinat enthaltenden Pflanzenbehandlungsmitteln bzw. die Verwendung von bestimmten N-Alkylglucamiden zur Verminderung der Drift bei der Applikation dieser Pflanzenbehandlungsmittel und Verfahren zur Verminderung der Drift bei der Applikation dieser Pflanzenbehandlungsmittel.

Pflanzenschutzmittel werden in sehr effizienter Weise unter Einsatz von Sprühtanks in Flugzeugen, Traktoren oder anderen Vorrichtungen auf landwirtschaftliche Produktionsfelder aufgebracht. Um eine möglichst genaue Platzierung der Wirksubstanzen zu erreichen, ist es erforderlich, einen möglichst engen Sprühkegel zu erhalten und ein Abdriften des Sprühnebels aus dem Zielort heraus zu vermeiden.

Die Drift des Sprühnebels wird im Wesentlichen durch die Tröpfchengrößenverteilung bestimmt. Je kleiner die Tröpfchen, umso länger die Verweilzeit in der Luft und umso größer die Tendenz horizontal abzudriften und zu verdampfen und/oder den Zielort zu verfehlen. Aus der Literatur ist bekannt, dass der Feintropfenanteil < 150 µm (Teske et al., 2004, The Role of Small Droplets in Classifying Drop Size Distributions, ILASS Americas 17th Annual Conference, Arlington VA), insbesondere < 100 µm (Vermeer et al., Proc. ISAA 2013, The use of adjvanted formulations for drift control), den Anteil der Tröpfchen im Sprühnebel bestimmt, der zum Drift-Effekt beiträgt. Die Reduktion des Feintropfenanteils im Sprühnebel ist daher entscheidend für eine Reduktion der Drift und wird daher benutzt, die Drifteigenschaften einer Zusammensetzung zu bestimmen.

Eine deutliche Minimierung des Drift-Effektes kann durch Zusatz geeigneter "drift control agents" zu Pflanzenschutz-Formulierungen erreicht werden, die eine Verminderung des Feintropfenanteils und damit eine Vergrößerung der Tröpfchen im Sprühnebel bewirken. Die mit "drift control agents" modifizierten Formulierungen müssen darüber hinaus gegenüber den Scherkräften, denen sie in den Sprühpumpen und -düsen ausgesetzt sind, unempfindlich sein. Gute biologische Abbaubarkeit, Kompatibilität mit anderen Bestandteilen der Pflanzenschutzmittel, sowie eine hohe Lagerstabilität und Temperaturstabilität sind weitere Anforderungen an "drift control agents". Es ist bekannt, dass die Rheologie wässriger Mittel durch Zusatz wasserlöslicher Polymere, beispielsweise Polyacrylamide, Acrylamid / Acrylsäurepolymere, Natriumpolyacrylat, Carboxymethylcellulose, Hydroxyethylcellulose, Methylcellulose, Polysaccharide, natürlicher und synthetischer guar gum (US-A-4,413,087, US-A-4,505,827, US-A-5,874,096) modifiziert werden kann, die zu einer Verschiebung des Tropfengrößenspektrums hin zu größeren Tropfen führt.

Auch Molasse und organische Verdicker wurden als wirksame Mittel zur Driftreduktion beschrieben (Pesticide Drift III; Drift Reduction with Spray Thickeners; Ware, G.W. et al.; J. of Economic Entomology 63; 1314-1316; 1970). Darüber hinaus ist bekannt, dass bestimmte Emulsionen - über einen nicht vollständig verstandenen Mechanismus - zu einem reduzierten Feintropfenanteil führen (Vermeer et al.; Crop Protection 44; 2013; Spray drift review: The extent to which a formulation can contribute to spray drift reduction).

Obwohl mit den bekannten Systemen bereits gute Ergebnisse erzielt werden, ist man aus technischen, ökonomischen und ökologischen Gründen weiterhin bestrebt, geeignete "drift control agents" zu finden, die auch unter Praxisbedingungen die Tröpfchenvolumina der wässrigen Mittel effektiv vergrößern und ein Abdriften des Sprühnebels reduzieren.

Wässrige Formulierungen von Glufosinat-ammonium sind beispielsweise bekannt aus EP-A-0048436, EP-A-0336151, EP-A-1093722 oder WO 2007/147500 A1. Dabei werden bevorzugt Alkylethersulfate verwendet. In marktübliche Formulierungen werden Alkylethersulfate der Alkylkettenlängen C₁₂-C₁₆ mit 1 bis 10 Ethylenoxyeinheiten als Adjuvants verwendet. Diese sind geeignet, die biologische Wirkung von Glufosinat bei der Applikation auf die grünen Teile von Pflanzen zu verstärken. Der genaue Wirkungsmechanismus der Alkylethersulfate ist dabei unbekannt. Die Einzigartigkeit in der Eignung von Alkylethersulfate zur Wirkungssteigerung bei Glufosinat liegt an einer Kombination günstiger Eigenschaften der Alkylethersulfate. Andere Adjuvants mit vergleichbaren Tensideigenschaften (wie z. B. Sprühnebelhaftung oder Spreiten auf Zielpflanzen) einschließlich aller im "Compendium of Herbicide adjuvants" (www.herbicide-adjuvants.com, 2014) beschriebenen Adjuvants für Herbizide führen zur Minderwirkung gegenüber den genannten Alkylethersulfaten. Auch Substanzen mit Lösungsmittelcharakter, wie Polyetherglykole, Glyzerin, Mineralöle, Mineralölkonzentrate, Polymere, Puffer und andere Substanzen zeichnen sich nicht durch eine vergleichbare Wirkung aus. Einzige nichtionische Tenside, die in marktüblichen Formulierungen (Liberty^{®}, der Firma Bayer, EPA Reg. No. 264 - 829) eingesetzt werden sind zuckerbasierte Alkylpolyglycoside. Diese werden allerdings nur in Kombination mit den oben genannten Alkylethersulfaten verwendet, um eine Minderwirkung der Glufosinat-Formulierung zu vermeiden.

Aufgrund der in den marktüblichen Glufosinat-Formulierungen üblicherweise enthaltenen C₁₂-C₁₆-Alkylethersulfate des genannten Typs, sowie den ggf. zusätzlich enthaltenen zuckerbasierte Alkylpolyglycoside erzeugen die Formulierungen nach der Verdünnung mit Wasser bei Applikation als Spritzbrühe einen hohen Feintropfenanteil, die über die zu behandelnde Fläche hinaus getragen werden können und das Versprühen so weniger effektiv oder sogar schädlich für angrenzende Flächen und Kulturen machen können.

Überraschenderweise wurde nun gefunden, dass sich bestimmte N-Alkyl-glucamide als driftreduzierende Adjuvantien in Glufosinat enthaltenden Pflanzenbehandlungsmitteln eignen und beim Versprühen dieser Pflanzenbehandlungsmittel eine effektive Vergrößerung der Tröpfchen durch eine Reduktion des Feintropfenanteils im Sprühnebel bewirken.

N-Alkylglucamide sind als Tenside zum Einsatz in Pflanzenbehandlungsmitteln bekannt.

WO 2016/050782 A1 beschreibt Glufosinat und ausgewählte N-Alkylglucamide enthaltende wässige Adjuvant-Zusammensetzungen.

Aus WO 2014/067663 A1 sind wässrige Adjuvant Zusammensetzungen bekannt, die ausgewählte N-Alkylglucamide enthalten. Eine Eignung der N-Alkylglucamide zur Driftreduktion wird in diesen Dokumenten nicht erwähnt.

Gegenstand der Erfindung ist die Verwendung eines oder mehrerer N-Alkylglucamide der Formel (I) 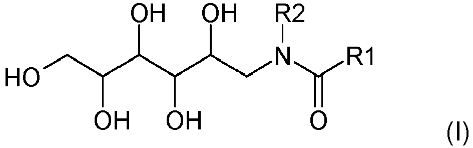 worin
- R1: für eine lineare oder verzweigte Alkylgruppe mit 5 bis 9 Kohlenstoffatomen steht, und
- R2: für eine Alkylgruppe mit 1 bis 3 Kohlenstoffatomen steht,
zur Verminderung der Drift bei der Applikation von Pflanzenbehandlungsmitteln, die mindestens Glufosinat als agrochemischen Wirkstoff enthalten.

Unter "Drift" im Sinne der Erfindung versteht man den Effekt, dass sich beim Versprühen des Pflanzenbehandlungsmittels kleine Tröpfchen bilden, die über die zu behandelnde Fläche hinaus getragen werden können und das Versprühen so weniger effektiv oder sogar schädlich für angrenzende Flächen und Kulturen machen können.

Zusätzlich zur Drift neigen kleinere Tröpfchen zu einer stärkeren Verdunstung, was zu einer verminderten Verfügbarkeit des Wirkstoffs auf der Zielfläche führen kann.

Im Rahmen der vorliegenden Erfindung versteht man unter "Driftreduzierung" bzw. "Verminderung der Drift" vorzugsweise die Verminderung des Anteils der Feintropfen mit einem Durchmesser < 105 µm im Sprühnebel bei der Applikation von Glufosinat enthaltenden Spritzbrühen, die N-Alkylglucamide der Formel (I) enthalten, im Vergleich zur Applikation von Glufosinat enthaltenden Spritzbrühen, die anstelle der N-Alkylglucamide der Formel (I) Alkylethersulfate der Alkylkettenlängen C₁₂-C₁₆ mit 1 bis 10 Ethylenoxyeinheiten enthalten, ggf. in Kombination mit zuckerbasierten Polyglycosiden (z. B. die Formulierung Liberty^{®}, der Firma Bayer), vorzugsweise um mindestens 10 % und besonders bevorzugt um mindestens 25 %.

Unter "Applikation" eines Pflanzenbehandlungsmittels im Sinne der Erfindung versteht man das Aufbringen einer wässrigen Spritzbrühe enthaltend mindestens Glufosinat als agrochemischen Wirkstoff und gegebenenfalls weitere agrochemische Substanzen auf die zu behandelnden Pflanzen und/oder auf deren Standort.

Bevorzugt werden Pflanzenbehandlungsmittel eingesetzt, welche als agrochemischen Wirkstoff Glufosinat enthalten. Besonders bevorzugt wird dabei der agrochemische Wirkstoff Glufosinat als wasserlösliches Salz eingesetzt, insbesondere als gegbenenfalls substituiertes Ammoniumsalz (wie als Ammonium-, Dimethylammonium-, Diglykolammonium-, N,N-Bis-(3-aminopropyl)methylammonium-, Dimethylglucammonium-, iso-Propylammonium- und Triethylammoniumsalz) oder Cholinsalz, und ganz besonders bevorzugt als Glufosinat-Ammoniumsalz.

Die erfindungsgemäß eingesetzten Pflanzenbehandlungsmittel können neben dem einen agrochemischen Wirkstoff Glufosinat noch mindestens einen weiteren agrochemischen Wirkstoff enthalten. Dabei handelt es sich vorzugsweise um agrochemische Wirkstoffe, die ausgewählt sind aus der Gruppe bestehend aus Pestiziden, Phytohormonen, vorzugsweise Wachstumsregulatoren, Mitteln zur biologischen Schädlingsbekämpfung, fungiziden Kupfer-Verbindungen und/oder Repellents.

Ist in dieser Beschreibung von wasserlöslichen Verbindungen die Rede, so werden darunter Verbindungen verstanden, die sich bei 25 °C zu mindestens 50 g/L in Wasser lösen.

Bevorzugt werden Glufosinat in Kombination mit weiteren wasserlöslichen agrochemischen Wirkstoffen eingesetzt. Besonders bevorzugte weitere wasserlösliche agrochemische Wirkstoffe sind Pestizide, davon insbesondere die wasserlöslichen Salze von Pestiziden, und äußerst bevorzugt die Herbizide, davon insbesondere die wasserlöslichen Salze von Herbiziden.

In einer weiteren bevorzugten Ausführungsform sind die weiteren wasserlöslichen Pestizide keine Herbizide sondern Insektizide, vorzugsweise aus der Gruppe der Chloronicotinyle, wie Thiamethoxam, oder Wachstumsregulatoren, wie Chlormequatchlorid.

Besonders bevorzugt in Kombination mit Glufosinat verwendete wasserlösliche Pestizide sind die wasserlösliche Herbizide und unter diesen sind wiederum die wasserlöslichen Salze von Acifluorfen, Aminopyralid, Amitrol, Asulam, Benazolin, Bentazon, Bialaphos, Bispyribac, Bromacil, Bromoxynil, Bicyclopyron, Chloramben, Clopyralid, 2,4-D, 2,4-DB, Dicamba, Dichlorprop, Difenzoquat, Diquat, Endothal, Fenoxaprop, Flamprop, Flumiclorac, Fluoroglycofen, Fomesafen, Fosamine, Glyphosat, Imizameth, Imazamethabenz, Imazamox, Imazapic, Imazapyr, Imazaquin, Imazethapyr, MCPA, MCPB, Mecoprop, Octansäure, Paraquat, Pelargonsäure, Picloram, Quizalofop, 2,3,6-TBA und Triclopyr bevorzugt.

Unter den wasserlöslichen Salzen der weiteren agrochemischen Wirkstoffe, insbesondere von Pestiziden, sind insbesondere die Alkali- und Ammoniumsalze und unter diesen wiederum die Kalium-, Ammonium-, Dimethylammonium-, Isopropylammonium-, Diglykolammonium- und die (2-Hydroxyethyl)-trimethyl-ammoniumsalze bevorzugt.

Die genaue chemische Zusammensetzung und die Strukturen all dieser Verbindungen sind bekannt und im Internet nachzusehen unter: http://www.alanwood.net/pesticides/index_cn_frame.html

Ganz besonders bevorzugt erfindungsgemäß eingesetzte Pflanzenbehandlungsmittel sind solche, bei denen Glufosinatammonium in Kombination mit mindestens einem wasserlöslichen Salz von Dicamba, bevorzugt mit Dicamba-Diglykolammonium, Dimethylammonium, N,N-Bis-(3-aminopropyl)methylammonium, Dimethylglucammonium und / oder Natrium Dicamba, verwendet werden.

Mit den oben beschriebenen Alkylglucamiden der Formel (I) lassen sich erfindungsgemäß eingesetzte Pflanzenbehandlungsmittel, insbesondere wässrige Herbizid-Formulierungen, mit ausgezeichneten anwendungstechnischen Eigenschaften herstellen.

In dem einen oder den mehreren Alkylglucamiden der Formel (I) steht der Rest R1 vorzugsweise für eine lineare oder verzweigte Alkylgruppe mit 7 bis 9 Kohlenstoffatomen. Der Rest R2 steht bevorzugt für eine Methylgruppe.

Besonders bevorzugt enthalten die erfindungsgemäß eingesetzten Pflanzenbehandlungsmittel ein Gemisch aus Octanoyl-N-methylglucamid (R1 = C₇-Alkyl, R2 = Methyl) und Decanoyl-N-methylglucamid (R1 = C₉-Alkyl, R2 = Methyl). Der Anteil an Octanoyl-N-methyl-glucamid in diesem Gemisch beträgt 10 bis 90 Gew.-%, vorzugsweise 20 bis 80 Gew.-% und besonders bevorzugt 30 bis 70 Gew.-%, bezogen auf die Gesamtmenge der in diesem Gemisch enthaltenen N-Alkyl-glucamide. Der Anteil an Decanoyl-N-methyl-glucamid in diesem Gemisch beträgt 10 bis 90 Gew.-%, vorzugsweise 20 bis 80 Gew.-% und besonders bevorzugt 30 bis 70 Gew.-%, bezogen auf die Gesamtmenge der in diesem Gemisch enthaltenen Alkylglucamide.

Der Pentahydroxyhexylrest in den N-Alkylglucamiden der Formel (I) verfügt über verschiedene chirale Zentren, so dass jeweils mehrere Stereoisomere existieren können. Üblicherweise werden die N-Alkylglucamide der Formel (I) aus natürlich vorkommenden Zuckern, wie der D-Glucose hergestellt, grundsätzlich ist aber auch die Verwendung anderer natürlicher oder synthetischer Hexosen oder anderer C₆-Bausteine möglich, so dass unterschiedliche Stereoisomere der Formel (I) resultieren können.

Die N-Alkylglucamide der Formel (I) basieren bevorzugt auf nachwachsenden Rohstoffen und zeichnen sich durch ein vorteilhaftes toxikologisches und ökologisches Profil aus. Sie besitzen eine hohe Löslichkeit in Wasser.

Die Herstellung der N-Alkylglucamide der Formel (I) ist z. B. in EP-A-550,637 hinlänglich vorbeschrieben und dem Fachmann bekannt. Sie erfolgt beispielsweise durch Kondensation von Carbonsäureestern mit einem sekundären N-Alkylglucamin, welches seinerseits durch reduktive Aminierung aus einem Zucker wie D-Glucose hergestellt werden kann.

Üblicherweise werden die N-Alkylglucamide der Formel (I) in Form von Lösungen eingesetzt. Zur Klarstellung sei hier erwähnt, dass sich die oben genannten Mengenangaben dabei auf den Aktivgehalt der Alkylglucamide der Formel (I) in der Lösung beziehen.

Zur besseren Handhabung werden die N-Alkylglucamide der Formel (I) üblicherweise in Form von wässrigen Lösungen, enthaltend 10 bis 90 Gew.-%, besonders bevorzugt 20 bis 80 Gew.-% und insbesondere bevorzugt 30 bis 70 Gew.-% des einen oder der mehreren N-Alkylglucamide der Formel (I) eingesetzt. Bedingt durch den Herstellungsprozess können diese Adjuvant-Zusammensetzungen zusätzlich als Nebenkomponente einen oder mehrere der Co-Solventien enthalten. Zur Klarstellung sei hier erwähnt, dass sich die oben genannten Mengenangaben dabei auf den Aktivgehalt der N-Alkylglucamide der Formel (I) in der Lösung beziehen.

Die erfindungsgemäß eingesetzten Pflanzenbehandlungsmittel enthalten vorzugsweise ein oder mehrere zwei- oder dreiwertige Alkohole als Co-Solventien.

Das eine oder die mehreren Co-Solventien können entweder als Nebenkomponente aus dem Herstellungsprozess des N-Alkylglucamids zugegen sein und/oder nachträglich zur Zusammensetzung zugegeben worden sein. Bei dem einen oder mehreren Co-Solventien handelt es sich um einen einzigen zwei- oder dreiwertigen Alkohol oder um ein Gemisch zweier oder mehrerer solcher Alkohole.

Im Falle einphasiger wässrig-organischer Lösungen kommen die ganz oder weitgehend wassermischbaren zwei- oder dreiwertigen Alkohole oder Alkoholgemische in Frage.

Geeignete Co-Solventien sind zwei- oder dreiwertige Alkohole, wie Ethylenglykol, Diethylenglykol, Propylenglykol, Glycerin oder Polyglykole, wie Polyethylen-, Polypropylen- bzw. gemischte Polyalkylenglykole (PAGs) und ganz besonders bevorzugt Glycerin, Propylenglykol und Dipropylenglykol.

Der Anteil des Co-Solvens oder der Co-Solventien im erfindungsgemäß eingesetzten Pflanzenbehandlungsmittel in der Form von Konzentraten beträgt üblicherweise bis zu 30 Gew.-%, bevorzugt 1 bis 25 Gew.-% und besonders bevorzugt 2 bis 20 Gew.-%. Dabei beziehen sich die Mengenangaben auf das Gesamtgewicht der Zusammensetzung. Die Mengen an Co-Solvens können natürlich durch Verdünnen vor der Applikation entsprechend herabgesetzt werden.

Überraschenderweise wurde gefunden, dass die Effektivität der Driftreduzierung im erfindungsgemäß eingesetzten Pflanzenbehandlungsmittel durch die Anwesenheit von Polyalkylenglykolethersulfatsalzen oder von Polyalkylenglykolethersulfonatsalzen nicht beeinträchtigt wird. Dies steht im Gegensatz zu Pflanzenbehandlungsmitteln, die Alkylethersulfate der Alkylkettenlängen C₁₂-C₁₆ mit 1 bis 10 Ethylenoxyeinheiten enthalten.

Die Erfindung betrifft daher vorzugsweise die Verwendung von ein oder mehreren N-Alkylglucamiden der oben beschriebenen Formel (I) zur Verminderung der Drift bei der Applikation von Pflanzenbehandlungsmitteln enthaltend,
a) mindestens Glufosinat als agrochemischen Wirkstoff,
b) ein oder mehrere N-Alkylglucamide der oben beschriebenen Formel (I),
c) ein oder mehrere Polyalkylenglykolethersulfatsalze oder Polyalkylenglykolethersulfonatsalze,
d) Wasser.

Insbesondere enthält das Pflanzenbehandlungsmittel
a) neben Glufosinat mindestens einen weiteren agrochemischen Wirkstoff und
e) optional ein oder mehrere Co-Solventien ausgewählt aus der Gruppe der zwei- oder dreiwertigen Alkohol, und
f) optiional weitere Tenside.

Komponenten a), b) und e) des erfindungsgemäß eingesetzten Pflanzenbehandlungsmittels sind bereits weiter oben beschrieben worden.

Bei Komponente c) des erfindungsgemäß eingesetzten Pflanzenbehandlungsmittels handelt es sich um ein sulfatiertes Polyalkylenglykol. Tenside dieses Typs können ein oder mehrere Sulfatgruppen und/oder Sulfonatgruppen pro Molekül enthalten. Vorzugsweise enthalten diese Tenside ein oder mehrere Sulfatgruppen.

Besonders bevorzugte Tenside dieses Typs weisen die nachfolgende Struktur auf

(HO-(CH₂-CH₂-O-)ₙ(CH₂-CH(CH₃)-O)ₘ-CH₂-CH₂-O-SO₂-O⁻)_{q} M^{q+},

worin
- n und m: unabhängig voneinander ganze Zahlen von 2 bis 40 bedeuten,
- q: 1 oder 2 ist, und
- M: ein ein- oder zweiwertiges Kation ist.

Üblicherweise enthalten die Tenside der Komponente c) wiederkehrende Struktureinheiten mit zwei bis vier Kohlenstoffatomen, also Einheiten abgeleitet von Ethylenoxid, von Propylenoxid und/oder von Butylenoxid. Bevorzugt enthalten Tenside der Komponente c) Ethylenoxid- und/oder Propylenoxideinheiten. Diese können in statistischer Verteilung im Molekül vorliegen oder in Form von Blöcken.

Bevorzugt enthalten die Tenside der Komponente c) im Mittel eine Sulfatgruppe pro Molekül. Die Tenside der Komponente c) treten im Allgemeinen als Gemisch von Oligomeren oder von Polymeren mit unterschiedlichem Polymerisationsgrad bzw. unterschiedlichem Molekulargewicht auf. Typische Polymerisationsgrade liegen im Bereich von 5 bis 80, vorzugsweise von 5 bis 60 und besonders bevorzugt von 10 bis 40 von wiederkehrenden Einheiten pro Molekül.

Besonders bevorzugt werden Zusammensetzungen verwendet, deren Komponente c) Ethylenoxid-, Propylenoxid- und/oder Butylenoxid-Einheiten enthält, insbesondere Ethylenoxid- und Propylenoxid-Einheiten.

Ganz besonders bevorzugt werden Zusammensetzungen verwendet, deren Komponente c) Blöcke von Ethylenoxid-Einheiten und von Propylenoxid-Einheiten enthält.

Die Gegenionen der Sulfatgruppe(n) oder der Sulfonatgruppe(n) der Komponente c) können beliebig sein. Typischerweise handelt es sich dabei um ein- bis dreiwertige Kationen, und insbesondere um ein- bis zweiwertige Kationen.

Bevorzugt werden Komponenten c) eingesetzt, deren Polyalkylenglykolethersulfatsalz ein Alkali-, Erdalkali-, Sulfonium-, Triethylammonium, Diglykolammonium und/oder Ammoniumsalz ist, insbesondere ein Ammoniumsalz, ein Triethylammoniumsalz, ein Diglykolammoniumsalz, ein Sulfoniumsalz, ein Natriumsalz oder ein Kaliumsalz und ganz besonders bevorzugt ein Ammoniumsalz, ein Triethanolammoniumsalz, ein Diglykolammoniumsalz, oder ein Kaliumsalz ist.

Als weitere Tenside (Komponente f)) kommen anionaktive, nichtionogene, kationaktive und/oder zwitterionische Tenside in Frage. Beispiele für solche Tenside sind nachstehend aufgeführt (wobei jeweils EO = Ethylenoxid-Einheiten, PO = Propylenoxid-Einheiten und BO = Butylenoxid-Einheiten von Seiten der Herstellung bzw. entsprechende Alkylenoxy-Einheiten in den Tensidmolekülen bedeuten).

Bei den Tensiden der Komponente f) kann es sich um ein einziges Tensid oder um ein Gemisch zweier oder mehrerer Tenside handeln. Bei den Tensiden der Komponente f) kann es sich generell um alle mit der Zusammensetzung kompatiblen nichtionischen, amphoteren, kationischen oder anionische Tenside handeln, welche keine Tenside der Komponente b) oder der Komponente c) sind.

Beispiele für nicht-ionische Tenside sind EO/PO-Blockcopolymere (EO: Ethylenoxy-Einheit; PO: Propylenoxy-Einheit), Alkoxylate wie beispielsweise Ethoxylate von längerkettigen aliphatischen Alkoholen (z. B. Alkoxylate und speziell Ethoxylate von linearen oder verzweigten C₈ bis C₂₄-Alkoholen) oder von aromatischen Alkoholen (z. B. Alkylphenolalkoxylate wie beispielsweise Alkylphenolethoxylate, Tristyrylphenol-alkoxylate wie beispielsweise Tristyrylphenolethoxylate, und Tri-sec-butylphen-olethoxylate), Rizinusölethoxylate, Ester von langkettigen Carbonsäuren mit ein- oder mehrwertigen Alkoholen sowie deren Ethoxylierungsprodukte, gegebenenfalls ethoxylierte Sorbitanester, Alkylpolyglycoside, Fettaminethoxylate, längerkettige Etheraminalkoxylate und Glucamide. Geeignete amphotere Tenside sind beispielsweise langkettige Alkyldimethylbetaine, Alkyldimethylaminoxide oder Alkyldimethyl-aminamidopropylaminoxide. Unter den anionischen Tensiden sind beispielsweise Ethersulfate von ethoxylierten Fettalkoholen, Umsetzungsprodukte von (gegebenenfalls ethoxylierten) langkettigen Alkoholen mit Phosphorsäurederivaten, Salze der Dodecylbenzol-sulfonsäure und Sulfosuccinate geeignet. Unter "langkettig" werden lineare oder verzweigte Kohlenwasserstoffketten mit mindestens 6 und maximal 22 Kohlenstoffatomen verstanden.

Eine bevorzugte Ausführungsform der Erfindung ist die Verwendung des einen oder der mehreren N-Alkylglucamide der Formel (I) zur Verminderung der Drift bei der Applikation von Glufosinat als agrochemischem Wirkstoff enthaltenden Pflanzenbehandlungsmitteln als in-can Variante. Bei dieser Ausführungsform werden die N-Alkylglucamide der Formel (I) zusammen mit den Inhaltsstoffen des Pflanzenbehandlungsmittels in eine konzentrierte Formulierung bereits eingebaut und als Spritzbrühe verdünnt mit Wasser ausgebracht.

Die erfindungsgemäße Verwendung des einen oder der mehreren N-Alkyl-glucamide der Formel (I) oder einer Zusammensetzung enthaltend ein oder mehrere N-Alkylglucamide der Formel (I) erfolgt vorzugsweise in anwendungsfertigen Glufosinat enthaltenden Pflanzenbehandlungsmitteln in Form von Spritzbrühen.

Übliche Formulierungsformen für die erfindungsgemäß verwendeten Pflanzenbehandlungsmittel sind beispielsweise wasserlösliche Flüssigkeiten (SL), Emulsionskonzentrate (EC), Emulsionen in Wasser (EW), Suspensionskonzentrate (SC, SE, FS, OD), in Wasser dispergierbare Granulate (WG), Granulate (GR) und Kapselkonzentrate (CS); diese und weitere mögliche Formuliertypen sind beispielsweise durch Crop Life International und in Pesticide Specifications, Manual on development and use of FAO and WHO specifications for pesticides, FAO Plant Production and Protection Papers - 173, prepared by the FAO/WHO Joint Meeting on Pesticide Specifications, 2004, ISBN: 9251048576 beschrieben.

Die Pflanzenbehandlungsmittel können gegebenenfalls die Wirkung verbessernde Adjuvantien enthalten. Ein Adjuvant in diesem Kontext ist eine Komponente, die die biologische Wirkung der Formulierung verbessert, ohne dass die Komponente selbst eine biologische Wirkung hat. Beispiele für Adjuvantien sind Penetrationsförderer, z. B. vegetative Öle wie beispielsweise Rapsöl, Sonnenblumenöl, Mineralöle wie beispielsweise Paraffinöle, Alkylester vegetativer Fettsäuren wie beispielsweise Rapsöl- oder Sojaölmethylester oder Alkanolalkoxylate und/oder Spreitmittel wie beispielsweise Alkylsiloxane und/oder Salze z. B. organische oder anorganische Ammonium- oder Phosphoniumsalze wie beispielsweise Ammoniumsulfat oder Diammonium-hydrogenphosphat und/oder die Retention fördernde Mittel wie z. B. Dioctylsulfosuccinat oder Hydroxypropylguar Polymere und/oder Humectants wie z. B. Glycerin und/oder Dünger wie beispielsweise Ammonium-, Kalium- oder Phosphor-enthaltende Dünger und/oder Mittel, die das Anhaften an der Blattoberfläche fördern.

Gegebenenfalls können die erfindungsgemäß verwendeten Pflanzenbehandlungsmittel Hilfstoffe enthalten, vorzugsweise in Kombination mit den oben genannten Komponenten. Bei den Hilfsstoffen kann es sich beispielsweise um Streckmittel, Lösemittel, Spontanitätsförderer, Trägerstoffe, Emulgiermittel, Dispergiermittel, Frostschutzmittel, Biozide und/oder Verdicker handeln.

Die erfindungsgemäß eingesetzten Pflanzenbehandlungsmittel werden in bekannter Weise hergestellt, z. B. durch Vermischen der Wirkstoffe mit Hilfsstoffen wie beispielsweise Streckmitteln, Lösemitteln und/oder festen Trägerstoffen und/oder weiteren Hilfsstoffen wie beispielsweise oberflächenaktive Stoffe. Die Herstellung der Pflanzenbehandlungsmittel als Formulierungen erfolgt entweder in geeigneten Anlagen oder auch vor oder während der Anwendung.

Als Hilfsstoffe können solche Stoffe Verwendung finden, die geeignet sind, der Formulierung des Wirkstoffs oder den aus diesen Formulierungen bereiteten Anwendungsformen (wie z. B. gebrauchsfähigen Pflanzenschutzmitteln wie Spritzbrühen) besondere Eigenschaften, wie bestimmte physikalische, technische und/oder biologische Eigenschaften zu verleihen.

Als Streckmittel eignen sich z. B. Wasser, polare und unpolare organische chemische Flüssigkeiten, wie bereits weiter oben beschrieben.

Auch verflüssigte gasförmige Streckmittel oder Lösemittel können eingesetzt werden. Insbesondere eignen sich solche Streckmittel oder Trägerstoffe, welche bei normaler Temperatur und unter Normaldruck gasförmig sind, z. B. Aerosol-Treibgase wie Halogenkohlenwasserstoffe sowie Butan, Propan, Stickstoff und Kohlendioxid.

Beispiele für Emulgier- und/oder schaumerzeugende Mittel, Dispergiermittel oder Benetzungsmittel mit ionischen oder nicht-ionischen Eigenschaften oder Mischungen dieser oberflächenaktiven Stoffe sind Salze von Polyacrylsäure, Salze von Lignosulphonsäure, Salze von Phenolsulphonsäure oder Naphthalinsulphonsäure, Polykondensate von Ethylenoxid mit Fettalkoholen oder mit Fettsäuren oder mit Fettaminen, mit substituierten Phenolen (vorzugsweise Alkylphenole oder Arylphenole), Salze von Sulphobernsteinsäureestern, Taurinderivate (vorzugsweise Alkyltaurate), Phosphorsäureester von polyethoxylierten Alkoholen oder Phenole, Fettsäureester von Polyolen und Derivate der Verbindungen enthaltend Sulphate, Sulphonate und Phosphate, z. B. Alkylarylpolyglycolether, Alkylsulfonate, Alkylsulfate, Arylsulfonate, Eiweißhydrolysate, Lignin-Sulfitablaugen und Methylcellulose. Die Anwesenheit einer oberflächenaktiven Substanz ist vorteilhaft, wenn einer der Wirkstoffe und/oder einer der inerten Trägerstoffe nicht in Wasser löslich ist und wenn die Anwendung in Wasser erfolgt.

Als weitere Hilfsstoffe können in den Formulierungen und den daraus abgeleiteten Anwendungsformen Farbstoffe wie anorganische Pigmente, z. B. Eisenoxid, Titanoxid, Ferrocyanblau und organische Farbstoffe wie Alizarin-, Azo- und Metallphthalocyaninfarbstoffe und Nähr- und Spurennährstoffe wie Salze von Eisen, Mangan, Bor, Kupfer, Kobalt, Molybdän und Zink vorhanden sein.

Weiterhin enthalten sein können Stabilisatoren wie Kältestabilisatoren, Konservierungsmittel, Oxidationsschutzmittel, Lichtschutzmittel oder andere die chemische und / oder physikalische Stabilität verbessernde Mittel. Weiterhin enthalten sein können schaumerzeugende Mittel oder Entschäumer.

Ferner können die Formulierungen und daraus abgeleiteten Anwendungsformen als zusätzliche Hilfsstoffe auch Haftmittel wie Carboxymethylcellulose, natürliche und synthetische pulverige, körnige oder latexförmige Polymere enthalten wie Gummiarabikum, Polyvinylalkohol, Polyvinylacetat sowie natürliche Phospholipide wie Kephaline und Lecithine und synthetische Phospholipide. Weitere Hilfsstoffe können mineralische und vegetabile Öle sein.

Gegebenenfalls können noch weitere Hilfsstoffe in den Formulierungen und den daraus abgeleiteten Anwendungsformen enthalten sein. Solche Zusatzstoffe sind beispielsweise Duftstoffe, schützende Kolloide, Bindemittel, Klebstoffe, Verdicker, thixotrope Stoffe, Penetrationsförderer, Retentionsförderer, Stabilisatoren, Sequestiermittel, Komplexbildner, Humectans, Spreitmittel.

Im Allgemeinen können die agrochemische Substanzen mit jedem festen oder flüssigen Zusatzstoff, welcher für Formulierungszwecke gewöhnlich verwendet wird, kombiniert werden.

Als Retentionsförderer kommen alle diejenigen Substanzen in Betracht, die die dynamische Oberflächenspannung verringern wie beispielsweise Dioctylsulfosuccinat oder die die Visko-Elastizität erhöhen wie beispielsweise Hydroxypropylguar Polymere.

Als Penetrationsförderer kommen im vorliegenden Zusammenhang alle diejenigen Substanzen in Betracht, die üblicherweise eingesetzt werden, um das Eindringen agrochemischer Substanzen in Pflanzen zu verbessern.

Penetrationsförderer werden in diesem Zusammenhang dadurch definiert, dass sie aus der (in der Regel wässerigen) Applikationsbrühe und/oder aus dem Spritzbelag in die Kutikula der Pflanze eindringen und dadurch die Stoffbeweglichkeit (Mobilität) der Wirkstoffe in der Kutikula erhöhen können. Die in der Literatur (Baur et al., 1997, Pesticide Science 51, 131 - 152) beschriebene Methode kann zur Bestimmung dieser Eigenschaft eingesetzt werden. Beispielhaft werden genannt Alkoholalkoxylate wie beispielsweise Kokosfettethoxylat (10) oder Isotridecylethoxylat (12), Fettsäureester wie beispielsweise Rapsöl- oder Sojaölmethylester, Fettamine Alkoxylate wie beispielsweise Tallowamine ethoxylat (15) oder Ammonium- und/oder Phosphonium-Salze wie beispielsweise Ammoniumsulfat oder Diammonium-hydrogenphosphat.

Die Herstellung der erfindungsgemäß verwendeten Pflanzenbehandlungsmittel ist je nach Formulierungstyp auf verschiedenen Wegen möglich, welche dem Fachmann hinlänglich bekannt sind. Bei der Herstellung kann man beispielsweise so vorgehen, dass man die N-Alkylglucamide der Formel (I) mit einem oder mehreren agrochemischen Substanzen sowie gegebenenfalls mit Hilfsstoffen vermischt. Die Reihenfolge, in der die Komponenten miteinander vermischt werden, ist beliebig. Bei der Herstellung kommen übliche Geräte in Betracht, die zur Herstellung von agrochemischen Formulierungen eingesetzt werden.

Bei der erfindungsgemäßen Verwendung werden Pflanzenbehandlungsmittel typischerweise in Form von Spritzbrühen ausgebracht. Dabei wird eine Spritzbrühe bevorzugt durch Verdünnung einer Konzentrat-Formulierung, mit einer definierten Menge Wasser hergestellt.

Weiterhin wurde gefunden, dass zum Erzielen einer befriedigenden Driftreduzierung ausgewählte Mengen des N-Alkylgucamids der Formel (I) und gegebenenfalls weiterer vorhandener Tenside in der wässrigen Spritzbrühe vorhanden sein müssen. Ist der Anteil an N-Alkylglucamid der Formel (I) und gegebenenfalls weiterer vorhandener Tenside zu hoch, so bildet sich ein zu hoher Feintropfenanteil, was sich nachteilig auf den Effekt der Driftreduzierung auswirkt. Ist andererseits der Anteil an N-Alkylglucamid der Formel (I) und gegebenenfalls weiterer vorhandener Tenside zu niedrig, so ist dessen Einfluss auf die die Erniedrigung der Oberflächenspannung in der Spritzbrühe zu gering, was sich nachteilig auf die Benetzung der Pflanze, Retention und biologische Wirksamkeit auswirkt.

Es wurde gefunden, dass der Effekt der Driftreduktion bei wässrigen Spritzbrühen besonders stark ausgeprägt ist, wenn der Gesamttensidgehalt, bezogen auf die Gesamtmenge der Spritzbrühe, 0,001 bis 0,3 Gew.-% beträgt, wobei der Anteil des N-Alkylglucamids der Formel (I), bezogen auf die Gesamtmenge an Tensid in der Spritzbrühe, 50 bis 100 Gew.-% ausmacht.

Tensidkomponenten werden häufig in der Form von Lösungen oder Dispersionen in Wasser eingesetzt. Die Prozentangaben zum Gesamttensidgehalt in dieser Beschreibung beziehen sich auf 100 % Aktivgehalt, sofern nichts anderes angegeben ist.

Zur Herstellung derartiger Spritzbrühen lassen sich vorzugsweise Konzentrate einsetzen, welche einen Gesamttensidgehalt, bezogen auf die Gesamtmenge des Konzentrats, von 0,1 bis 30 Gew.-% beträgt, wobei der Anteil des N-Alkylglucamids der Formel (I), bezogen auf die Gesamtmenge an Tensid im Konzentrat, 50 bis 100 Gew.-% ausmacht.

Die Erfindung betrifft daher auch ein Verfahren zur Verminderung der Drift bei der Applikation eines Pflanzenbehandlungsmittels, dadurch gekennzeichnet, dass eine wässrige Spritzbrühe enthaltend ein oder mehrere N-Alkylglucamide der Fomel (I), mindestens Glufosinat als agrochemischen Wirkstoff und gegebenenfalls weitere Tenside auf die zu behandelnden Pflanzen oder deren Standort aufgesprüht wird, wobei der Gesamttensidgehalt, bezogen auf die Gesamtmenge der wässrigen Spritzbrühe, 0,001 bis 0,30 Gew.-%, vorzugsweise 0,01 bis 0,25 Gew.-% beträgt, und wobei der Anteil des N-Alkylglucamids der Formel (I), bezogen auf die Gesamtmenge an Tensid in der wässrigen Spritzbrühe, 50 bis 100 Gew.-% ausmacht.

Die Erfindung betrifft außerdem ein Verfahren zur Herstellung einer wässrigen Spritzbühe mit driftreduzierenden Eigenschaften bei deren Applikation, dadurch gekennzeichnet, dass ein Konzentrat enthaltend ein oder mehrere N-Alkylglucamide der Fomel (I), mindestens Glufosinat als agrochemischen Wirkstoffund gegebenenfalls weitere Tenside mit Wasser zu einer wässrigen Spritzbrühe verdünnt wird, wobei der Gesamttensidgehalt des Konzentrats, bezogen auf die Gesamtmenge des Konzentrats, 0,1 bis 30 Gew.-%, vorzugsweise 1 bis 25 Gew.-% beträgt, der Anteil des N-Alkylglucamids der Formel (I), bezogen auf die Gesamtmenge an Tensid im Konzentrat, 50 bis 100 Gew.-% ausmacht, und wobei der Gesamttensidgehalt der wässrigen Spritzbrühe, bezogen auf die Gesamtmenge der wässrigen Spritzbrühe, 0,001 bis 0,30 Gew.-%, vorzugsweise 0,01 bis 0,25 Gew.-% beträgt, und der Anteil des N-Alkylglucamids der Formel (I), bezogen auf die Gesamtmenge an Tensid in der wässrigen Spritzbrühe, 50 bis 100 Gew.-% ausmacht.

Bevorzugt enthalten die erfindungsgemäß eingesetzten Zusammensetzungen in der Form von Konzentraten 1 bis 40 Gew.-%, vorzugsweise 10 bis 35 Gew.-%, insbesondere 15 bis 30 Gew.-%, des agrochemischen Wirkstoffs Glufosinat. Dabei beziehen sich die Mengenangaben auf das Gesamtgewicht der Zusammensetzung. Die Mengen des Glufosinats und gegebenenfalls weiterer damit eingesetzter agrochemischer Wirkstoffe können natürlich durch Verdünnen vor der Applikation entsprechend herabgesetzt werden.

Bevorzugt enthalten die erfindungsgemäß eingesetzten Zusammensetzungen in der Form von Konzentraten 1 bis 40 Gew.-%, besonders bevorzugt 2 bis 30 Gew.-%, insbesondere bevorzugt 5 bis 20 Gew.-% des einen oder der mehreren weiteren agrochemischen Wirkstoffe. Dabei beziehen sich die Mengenangaben auf das Gesamtgewicht der Zusammensetzung. Die Mengen der weiteren agrochemischen Wirkstoffe können natürlich durch Verdünnen vor der Applikation entsprechend herabgesetzt werden.

Des Weiteren betrifft die Erfindung ein Verfahren zur Verminderung der Drift bei der Applikation eines Pflanzenbehandlungsmittels und enhaltend die oben beschriebenen Komponenten a), b), c) und d) und gegebenenfalls e) und/oder f), dadurch gekennzeichnet, dass das Pflanzenbehandlungsmittel in Form einer wässrigen Spritzbrühe auf die zu behandelnden Pflanzen oder deren Standort gesprüht wird.

Der Gehalt an agrochemischen Wirkstoffen der erfindungsgemäß eingesetzten Pflanzenbehandlungsmittel kann in weiten Bereichen variieren. Die Konzentration der agrochemischen Wirkstoffen in den Anwendungsformen, insbesondere in den Spritzbrühen, kann üblicherweise zwischen 0,000001 und 10 Gew.-% an agrochemischem Wirstoff, vorzugsweise zwischen 0,00001 und 5 Gew.-% an agrochemischem Wirkstoff, besonders bevorzugt zwischen 0,0001 und 1 Gew.-% an agrochemischem Wirkstoff und insbesondere bevorzugt zwischen 0,001 und 1 Gew.-% an agrochemischem Wirkstoff, bezogen auf das Gewicht der Anwendungsform, insbesondere der Spritzbrühe, liegen. Die Anwendung geschieht in einer den Anwendungsformen angepaßten üblichen Weise.

### Beispiele

Im Folgenden wird die Erfindung anhand von Beispielen verdeutlicht, die jedoch keinesfalls als Einschränkung anzusehen sind.

Bei den im Folgenden angegebenen Prozentangaben handelt es sich um Gewichtsprozent (Gew.-%) sofern nicht explizit anders angegeben.

Bei den eingesetzten Rohstoffen handelt es sich um:
- Glufosinat-ammonium: Glufosinat Ammonium Salz (98 Gew.-% aktiv), Firma Schirm
- Dicamba: Dicamba Säure (98 Gew.-% aktiv), Firma Schirm
- DGA: Diglykolamin, Firma Huntsman
- Genapol LRO paste: Laurylethersulphat (68 Gew.-% aktiv), Firma Clariant
- Synergen GA: C8/10 Glucamid (50 Gew.-% aktiv), Firma Clariant
- Synergen PFA: Polyalkylenethersulfat-ammonium (50 Gew.-% aktiv), Firma Clariant
- AMS: Ammoniumsulfat, Firma Redox
- Propylenglykol: 1,2-Propylenglykol, Firma Clariant
- Dipropylenglykol: Dipropylenglykol, Firma Merck
- Glycerin: Glycerin, Firma Merck
- 1-Methoxy-2-Propanol: 1-Methoxy-2-Propanol, Firma Alfa Aesar
- Di-Ammoniumhydrogencitrat: Di-Ammoniumhydrogencitrat, Firma Merck
- Entschäumer: Entschäumer auf Silkonbasis Firma Momentive
- Wasser: Deionisiertes Wasser oder Leitungswasser
- Liberty^{®}: Glufosinat Ammonium SL Formulierung (280 g/l), Firma Bayer

### Beispiel 1: Wässrige Glufosinat-Formulierungen (Glufosinat-ammonium 200 - 350 g/l a.e.)

Die in Tabelle 1 genannten Glufosinatammonium Zubereitungen A1 - A11 wurden durch Mischen der verschiedenen Komponenten mit Wasser hergestellt. Anschließend wurden die Zubereitungen 8 Wochen bei -10 °C, 0 °C, 25 °C (Raumtemperatur) und 2 Wochen bei 54 °C gelagert um die Lagerstabilität und das Phasenverhalten zu bestimmen.

**Tabelle 1: Zusammensetzung wässrige Glufosinat-Formulierungen Glufosinatammonium 200 - 350 g/l a.i.) in Gew.-%**

| Glufosinat Konzentration (g/L) | 280 | 280 | 280 | 280 | 200 | 200 | 200 | 350 | 350 | 280 | 280 |
|---|---|---|---|---|---|---|---|---|---|---|---|
| Beispiel | A1 (nicht erfindungsgemäß) | A2 | A3 | A4 | A5 | A6 | A7 | A8 | A9 | A10 | A11 |
| Glufosinat ammonium | 24,8 | 25,1 | 24,9 | 24,9 | 18,0 | 17,5 | 17,1 | 30,2 | 30,4 | 24,9 | 24,9 |
| Genapol LRO Paste | 25,0 | 0,0 | 0,0 | 0,0 | 0,0 | 0,0 | 0,0 | 0,0 | 0,0 | 0,0 | 0,0 |
| Synergen GA | 0,0 | 50,0 | 33,5 | 20,0 | 50,0 | 30,0 | 25,0 | 45,0 | 30,0 | 10,0 | 12,5 |
| Synergen PFA | 0,0 | 0,0 | 0,0 | 0,0 | 0,0 | 0,0 | 0,0 | 0,0 | 0,0 | 5,0 | 7,5 |
| Propylenglykol | 0,0 | 10,0 | 10,0 | 0,0 | 10,0 | 10,0 | 0,0 | 10,0 | 10,0 | 0,0 | 0,0 |
| Dipropylenglykol | 10,0 | 0,0 | 0,0 | 0,0 | 0,0 | 0,0 | 0,0 | 0,0 | 0,0 | 0,0 | 0,0 |
| Glycerin | 0,0 | 0,0 | 0,0 | 10,0 | 0,0 | 0,0 | 10,0 | 0,0 | 0,0 | 10,0 | 10,0 |
| 1-Methoxy-2-Propanol | 5,0 | 1,0 | 2,0 | 2,0 | 0,0 | 0,0 | 0,0 | 1,0 | 1,0 | 0,0 | 0,0 |
| Di-Ammonium-hydrogencitrat | 0,0 | 1,0 | 1,0 | 1,0 | 1,0 | 1,0 | 1,0 | 1,0 | 1,0 | 1,0 | 1,0 |
| Wasser | 35,1 | 12,8 | 23,6 | 32,1 | 21,0 | 36,5 | 36,9 | 12,7 | 22,5 | 49,1 | 44,1 |
| Ammoniumsulfat | 0,0 | 0,0 | 5,0 | 10,0 | 0,0 | 5,0 | 10,0 | 0,0 | 5,0 | 0,0 | 0,0 |
| Momentive SAG 1572 (Entschäumer) | 0,1 | 0,02 | 0,02 | 0,02 | 0,02 | 0,02 | 0,02 | 0,04 | 0,02 | 0,04 | 0,04 |
| Aussehen 54 °C | homogen | homogen | homogen | homogen | homogen | homogen | homogen | homogen | homogen | homogen | homogen |
| Aussehen 25 °C | homogen | homogen | homogen | homogen | homogen | homogen | homogen | homogen | homogen | homogen | homogen |
| Aussehen 0 °C | homogen | homogen | homogen | homogen | homogen | homogen | homogen | homogen | homogen | homogen | homogen |
| Aussehen -10 °C | homogen | gefroren | homogen | gefroren | gefroren | gefroren | gefroren | gefroren | gefroren | gefroren | gefroren |

Die erfindungsgemäß eingesetzten Zusammensetzungen sind bei 0 °C, Raumtemperatur (25 °C) und 54 °C homogen und phasenstabil. Bei -10 °C Lagerung über 8 Wochen werden einige der erfindungsgemäß eingesetzten Zusammensetzungen fest, gehen aber bei 0 °C wieder in homogenen und phasenstabilen Zustand über.

Die erfindungsgemäß eingesetzten Zusammensetzungen sind bei -10 °C, 0 °C, Raumtemperatur (ca. 25 °C) und 54 °C homogen und phasenstabil.

### Beispiel 2: Wässrige Glufosinat -Dicamba-Kombi-Formulierungen (200 g/l a.e. Glufosinatammonium und 200 g/l a.e. Dicamba DGA)

Die in Tabelle 2 genannten Glufosinatammonium Zubereitungen B1 - B3 wurden durch Mischen der verschiedenen Komponenten mit Wasser hergestellt. Anschließend wurden die Zubereitungen 2 Wochen bei -10 °C, 0 °C, 25 °C (Raumtemperatur) und 54 °C gelagert um die Lagerstabilität und das Phasenverhalten zu bestimmen.

**Tabelle 2: Zusammensetzung Glufosinat -Dicamba-Kombi-Formulierungen (200 g/l a.i. Glufosinatammonium und 200 g/l a.e. Dicamba)**

| Glufosinat / Dicamba Konzentration (g/L) | 200 / 200 | 200 / 200 | 200 / 200 |
|---|---|---|---|
| Beispiel | B1 | B2 | B3 |
| Glufosinat ammonium | 17,0 | 17,0 | 18,9 |
| Dicamba | 16,6 | 16,6 | 17,2 |
| DGA | 8,1 | 8,1 | 8,1 |
| Synergen GA | 15,0 | 20,0 | 25,0 |
| Propylenglykol | 9,5 | 9,5 | 9,5 |
| 1-Methoxy-2-Propanol | 2,0 | 2,0 | 2,0 |
| Di-Ammonium-hydrogencitrat | 1,0 | 1,0 | 1,0 |
| Wasser | 30,8 | 25,8 | 18,3 |

| Momentive SAG 1572 (Entschäumer) | 0,02 | 0,02 | 0,02 |
|---|---|---|---|
| Aussehen 54 °C | homogen | homogen | homogen |
| Aussehen 25 °C | homogen | homogen | homogen |
| Aussehen 0 °C | homogen | homogen | homogen |
| Aussehen -10 °C | homogen | homogen | homogen |

Die erfindungsgemäß eingesetzten Zusammensetzungen sind bei -10 °C, 0 °C, Raumtemperatur (ca. 25 °C) und 54 °C homogen und phasenstabil.

### Beispiel 3: Herstellung der Spritzbrühen mit Glufosinat Ammonium Formulierungen aus Tabelle 1 und 2

Im Folgenden wird in Tabelle 3 die Zusammensetzung der Spritzbrühen V1 - V19 angegeben. Diese Spritzbrühen wurden durch Mischen der Glufosinat Formulierungen aus Tabelle 1 und 2, sowie der kommerziellen Formulierung Liberty als Referenz und Wasser hergestellt. Die in Tabelle 3 angegebene Gesamtmenge Tensid in der Spritzbrühe ist bezogen auf eingesetzte Produkte (Genapol^{®} LRO, Synergen^{®} GA, Synergen PFA) ohne Berücksichtigung des Aktivgehalts und berechnet aus eingesetzter Menge "Glufosinat Formulierung" x Menge Tensid der Formulierung (siehe Tabellen 1 und 2).

**Tabelle 3**

| Spritzbrühe | Formulierung | Menge Glufosinat Formulierung [Gew.-%] | Menge Tensid in Spritzbrühe [Gew.-%] |
|---|---|---|---|
| V1 | Liberty (nicht erfindungsgemäß) | 0,89 | - |
| V2 | Liberty (nicht erfindungsgemäß) | 1,43 | - |
| V3 | A1 (nicht erfindungsgemäß) | 0,89 | 0,22 |
| V4 | A1 (nicht erfindungsgemäß) | 1,43 | 0,36 |
| V5 | A2 | 1,20 | 0,60 |
| V6 | A3 | 1,20 | 0,40 |
| V7 | A4 | 1,20 | 0,24 |
| V8 | A5 | 1,66 | 0,83 |
| V9 | A6 | 1,66 | 0,50 |
| V10 | A7 | 1,66 | 0,42 |
| V11 | A8 | 1,00 | 0,45 |
| V12 | A9 | 1,00 | 0,30 |
| V13 | A10 | 1,00 | 0,15 |
| V14 | A10 | 1,60 | 0,24 |
| V15 | A11 | 1,00 | 0,20 |
| V16 | A11 | 1,60 | 0,32 |
| V17 | B1 | 1,60 | 0,24 |
| V18 | B2 | 1,60 | 0,32 |
| V19 | B3 | 1,60 | 0,40 |

### Beispiel 4: Tropfengrößenverteilung der erfindungsgemäß eingesetzten Glufosinat-Ammonium Formulierungen

### 4A: Messung der Tropfengrößenverteilung

Ein Malvern Spraytec "real-time spray sizing system" wurde zur Bestimmung der Tropfengrößenverteilung verwendet. Dazu wurde das System (STP5311, Malvern Instruments GmbH, Heidelberg, Germany) in einer eigens konstruierten Spritzkabine montiert mit der Option, praxisübliche Spritzapplikationen bei frei einstellbarem Druck für diverse hydraulische Düsen und frei einstellbaren Abständen (Düse-Zieloberfläche) wählen zu können. Die Spritzkabine ist verdunkelbar und alle Störparameter können ausgeschaltet werden Für die Messungen wurde die Standardflachstrahldüse XR11002 (Teejet) mit hohem Anteil an feinen Tropfen (< 105 µm) im Tropfenspektrum und die Injektordüsen ID(3)12002 (Lechler) mit gröberen Tropfengrößen verwendet. Der eingestellte Druck wurde variiert und ein mittlerer Druck von 3 bar wurde für die nachfolgend berichteten Messungen konstant gehalten. Temperatur und relative Luftfeuchte variierten zwischen 21,5 und 29 °C bzw. 33 % und 56 %.

Die Spraytec Messung wurde bei der Einstellung von 1 kHz vorgenommen, nachdem sich Messungen bei 2,5 kHz oder höher wie auch andere Einflussgrößen wie zusätzliche Absaugung als vernachlässigbar erwiesen. Die Messung im Sprühnebel wurde konstant gehalten bei einer Position mit Abständen von genau 29,3 cm zur Düse und 0,4 cm vom Lot unter Düse. Die Messungen erfolgten innerhalb von 5 Sekunden und berichtet wird das Mittel von 6 Wiederholungen als Volumenanteil der Tropfen mit Durchmesser < 90 µm ("Vol 90"), < 105 µm ("Vol 105") und < 150 µm ("Vol 150") (prozentualer Standardfehler 0,5 - 2,5 %). Als weiterer Messparameter wurde der Volumenanteil der Tropfen mit Durchmesser < 210 µm bestimmt ("Vol 210") und ins Verhältnis zum Volumenanteil der Tropfen mit Durchmesser < 105 µm gesetzt ("Vol 210 / Vol 105"). In der Versuchsreihe wurden als kommerzieller Benchmark Spritzbrühen mit der Glufosinat Ammonium Formulierungen Liberty^{®} der Firma Bayer mitvermessen. Des Weiteren wurde die prozentuale Reduktion des Volumenanteils der Tropfen mit Durchmesser < 105 µm bei Verwendung von Spritzbrühen enthaltend die Testsub-stanzen im Vergleich zur Verwendung von Spritzbrühe V2 mit kommerzieller Glufosinat Ammonium Formulierungen Liberty^{®} als internernem Standard errechnet ("Red 105").

### 4B: Tropfengrößenverteilung für Injektordüse ID(3)12002 (bei 3bar) unter Verwendung der Spritzbrühen V1 - V19 (Zusammensetzung siehe Tabelle 3).

**Tabelle 4**

| Sprühflüssigkeit | Formulierung | Vol 90 [Vol.-%] | Vol 105 [Vol.-%] | Vol 150 [Vol.-%] | Vol 210 / Vol 105 | Red 105 [%] |
|---|---|---|---|---|---|---|
| V1 | Liberty (n. e.) | 5,01 | 7,99 | 19,20 | 4,35 | 5,06 |
| V2 | Liberty (n. e.) | 5,33 | 8,42 | 20,21 | 4,38 | 0,00 |
| V3 | A1 (n. e.) | 5,83 | 8,79 | 19,66 | 3,98 | -4,47 |
| V4 | A1 (n. e.) | 5,68 | 8,67 | 19,87 | 4,12 | -3,03 |
| V5 | A2 | 4,91 | 8,10 | 20,49 | 4,61 | 3,73 |
| V6 | A3 | 3,24 | 5,42 | 15,38 | 5,72 | 35,65 |
| V7 | A4 | 0,84 | 1,38 | 3,64 | 5,89 | 83,57 |
| V8 | A5 | 5,05 | 8,13 | 20,19 | 4,54 | 3,43 |
| V9 | A6 | 2,23 | 4,05 | 11,89 | 5,93 | 51,90 |
| V10 | A7 | 1,45 | 2,61 | 7,91 | 6,61 | 69,02 |
| V11 | A8 | 2,91 | 5,00 | 13,27 | 4,96 | 40,64 |
| V12 | A9 | 2,13 | 3,52 | 8,90 | 4,70 | 58,18 |
| V13 | A10 | 2,06 | 3,23 | 7,42 | 4,37 | 61,67 |
| V14 | A10 | 2,39 | 4,05 | 10,52 | 5,01 | 51,93 |
| V15 | A11 | 2,30 | 3,77 | 9,33 | 4,72 | 55,18 |
| V16 | A11 | 2,56 | 4,42 | 11,74 | 5,06 | 47,45 |
| V17 | B1 | 2,17 | 3,47 | 8,39 | 4,63 | 58,83 |
| V18 | B2 | 2,78 | 4,68 | 12,06 | 4,84 | 44,44 |
| V19 | B3 | 3,31 | 5,74 | 15,12 | 4,83 | 31,83 |

| | | | | | | |
|---|---|---|---|---|---|---|
| n. e. = nicht erfindungsgemäß | | | | | | |

### 4C: Tropfengrößenverteilung für Flachstrahldüse Teejet XR110-02 (bei 3bar) unter Verwendung der Spritzbrühen V1 - V19 (Zusammensetzung siehe Tabelle 2).

**Tabelle 5**

| Sprühflüssigkeit | Formulierung | Vol 90 [Vol.-%] | Vol 105 [Vol.-%] | Vol 150 [Vol.-%] | Vol 210 / Vol 105 | Red 105 [%] |
|---|---|---|---|---|---|---|
| V1 | Liberty (n. e.) | 27,37 | 37,66 | 64,40 | 2,25 | 1,87 |
| V2 | Liberty (n. e.) | 28,43 | 38,38 | 63,73 | 2,16 | 0,00 |
| V3 | A1 (n. e.) | 27,77 | 37,84 | 63,94 | 2,22 | 1,39 |
| V4 | A1 (n. e.) | 28,62 | 38,31 | 62,99 | 2,13 | 0,18 |
| V5 | A2 | 26,55 | 37,55 | 65,02 | 2,26 | 2,15 |
| V6 | A3 | 26,72 | 36,95 | 62,74 | 2,23 | 3,71 |
| V7 | A4 | 22,07 | 31,43 | 56,61 | 2,48 | 18,10 |
| V8 | A5 | 31,67 | 42,38 | 67,91 | 2,03 | -10,43 |
| V9 | A6 | 18,84 | 28,13 | 54,26 | 2,74 | 26,70 |
| V10 | A7 | 18,31 | 27,36 | 53,15 | 2,79 | 28,70 |
| V11 | A8 | 23,96 | 34,64 | 62,63 | 2,43 | 9,73 |
| V12 | A9 | 23,34 | 33,59 | 60,79 | 2,46 | 12,48 |
| V13 | A10 | 22,90 | 32,65 | 58,88 | 2,47 | 14,92 |
| V14 | A10 | 22,70 | 32,20 | 57,69 | 2,46 | 16,11 |
| V15 | A11 | 23,19 | 32,86 | 58,71 | 2,44 | 14,37 |
| V16 | A11 | 22,93 | 32,69 | 58,68 | 2,45 | 14,81 |
| V17 | B1 | 20,67 | 30,66 | 58,29 | 2,65 | 20,10 |
| V18 | B2 | 23,93 | 33,88 | 60,06 | 2,40 | 11,72 |
| V19 | B3 | 23,53 | 33,88 | 61,26 | 2,45 | 11,73 |

| | | | | | | |
|---|---|---|---|---|---|---|
| n. e. = nicht erfindungsgemäß | | | | | | |

### Beispiel 5: Verwendung mit Glufosinat zur Unkrautkontrolle

Die Formulierungen A2 und A10 gemäß Tabelle 1 wurden mit Wasser verdünnt, so dass eine Wasseraufwandmenge von 120 - 400 l/ha bei einer üblichen Aufwandmenge für Glufosinate (300 - 1000 g/ha) bei Applikation auf Nichtkulturland resultiert mit einem unter natürlichen Bedingungen aufgelaufenes Spektrum von mono- und dikotylen Schadpflanzen. Eine Bewertung der Wirkung nach 4 Wochen ergab, dass die grünen Teile der Schadpflanzen abgestorben waren und somit eine gute Kontrolle der Schadpflanzen erfolgte. Beispielsweise zeigten Formulierungen A2 und A10 der Tabelle 1 im Vergleich zur handelsüblichen Formulierung Liberty^{®} bei gleicher Aufwandmenge Glufosinat in der biologischen Wirkung vergleichbar gute Ergebnisse bei der Kontrolle von mono- und dikotylen Schadpflanzen.

## Patentansprüche

1. Verwendung eines oder mehrerer N-Alkylglucamide der Formel (I) 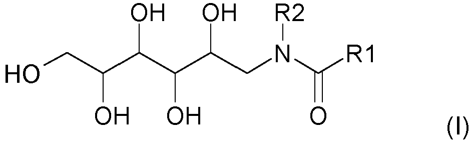 worin
R1 für eine lineare oder verzweigte Alkylgruppe mit 5 bis 9 Kohlenstoffatomen steht, und
R2 für eine Alkylgruppe mit 1 bis 3 Kohlenstoffatomen steht,
zur Verminderung der Drift bei der Applikation Pflanzenbehandlungsmitteln, die mindestens Glufosinat als agrochemischen Wirkstoff enthalten.

2. Verwendung nach Anspruch 1, **dadurch gekennzeichnet, dass** das Pflanzenbehandlungsmittel Glufosinat als Salz enthält und besonders bevorzugt das Ammoniumsalz des Glufosinats enthält.

3. Verwendung nach mindestens einem der Ansprüche 1 bis 2, **dadurch gekennzeichnet, dass** das Pflanzenbehandlungsmittel neben Glufosinat noch mindestens einen weiteren agrochemischen Wirkstoff enthält.

4. Verwendung nach Anspruch 3, **dadurch gekennzeichnet, dass** der weitere agrochemische Wirkstoff ein wasserlösliches Salz eines Pestizids ist, bevorzugt ein wasserlösliches Salz eines Herbizids.

5. Verwendung nach Anspruch 1, **dadurch gekennzeichnet, dass** das eingesetzte Pflanzenbehandlugsmittel Glufosinatammonium in Kombination mit mindestens einem wasserlöslichen Salz von Dicamba, bevorzugt mit Dicamba-Diglykolammonium, Dimethylammonium, N,N-Bis-(3-aminopropyl)methylammonium, Dimethylglucammonium und / oder Natrium Dicamba, enthält.

6. Verwendung nach mindestens einem der Ansprüche 1 bis 5, **dadurch gekennzeichnet, dass** das Pflanzenbehandlungsmittel
a) Glufosinat
b) ein oder mehrere N-Alkylglucamide der Formel (I) nach Anspruch 1,
c) ein oder mehrere Polyalkylenglykolethersulfatsalze oder Polyalkylenglykolethersulfonatsalze
d) Wasser
enthält.

7. Verwendung nach mindestens einem der Ansprüche 1 bis 6, **dadurch gekennzeichnet, dass** das Pflanzenbehandlungsmittel
a) neben Glufosinat mindestens einen weiteren agrochemischen Wirkstoff, und
e) optional ein oder mehrere Co-Solventien ausgewählt aus der Gruppe der zwei- oder dreiwertigen Alkohol, und
f) optional weitere Tenside
enthält.

8. Verwendung nach mindestens einem der Ansprüche 1 bis 7, **dadurch gekennzeichnet, dass** die N-Alkylglucamide der Formel (I) zusammen mit den Inhaltsstoffen des Pflanzenbehandlungsmittels in eine konzentrierte Formulierung bereits eingebaut werden.

9. Verwendung nach mindestens einem der Ansprüche 1 bis 8, **dadurch gekennzeichnet, dass** das Pflanzenbehandlungsmittel als Spritzbrühe vorliegt.

10. Verfahren zur Verminderung der Drift bei der Applikation eines Pflanzenbehandlungsmittels, **dadurch gekennzeichnet, dass** eine wässrige Spritzbrühe enthaltend ein oder mehrere N-Alkylglucamide der Fomel (I) nach Anspruch 1, mindestens Glufosinat als agrochemischen Wirkstoff auf die zu behandelnden Pflanzen oder deren Standort aufgesprüht wird, wobei der Gesamttensidgehalt, bezogen auf die Gesamtmenge der wässrigen Spritzbrühe, 0,001 bis 0,30 Gew.-% beträgt, und wobei der Anteil des N-Alkylglucamids der Formel (I), bezogen auf die Gesamtmenge an Tensid in der wässrigen Spritzbrühe, 50 bis 100 Gew.-% ausmacht.

11. Verfahren nach Anspruch 10, **dadurch gekennzeichnet, dass** das Pflanzenbehandlungsmittel die Komponenten a), b), c) und d) nach Anspruch 6 enthält.

12. Verfahren zur Herstellung einer wässrigen Spritzbühe mit driftreduzierenden Eigenschaften bei deren Applikation, **dadurch gekennzeichnet, dass** ein Konzentrat enthaltend ein oder mehrere N-Alkylglucamide der Fomel (I) nach Anspruch 1, mindestens Glufosinat als agrochemischen Wirkstoff mit Wasser zu einer wässrigen Spritzbrühe verdünnt wird, wobei der Gesamttensidgehalt des Konzentrats, bezogen auf die Gesamtmenge des Konzentrats, 0,1 bis 30 Gew.-% beträgt, der Anteil des N-Alkylglucamids der Formel (I), bezogen auf die Gesamtmenge an Tensid im Konzentrat, 50 bis 100 Gew.-% ausmacht, und wobei der Gesamttensidgehalt der wässrigen Spritzbrühe, bezogen auf die Gesamtmenge der wässrigen Spritzbrühe, 0,001 bis 0,30 Gew.-% beträgt, und der Anteil des N-Alkylglucamids der Formel (I), bezogen auf die Gesamtmenge an Tensid in der wässrigen Spritzbrühe, 50 bis 100 Gew.-% ausmacht.

## Claims

1. Use of one or more N-alkylglucamides of the formula (I) 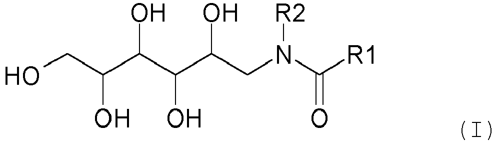 where
R1 is a linear or branched alkyl group having 5 to 9 carbon atoms and
R2 is an alkyl group having 1 to 3 carbon atoms,
for reducing drift during application of crop-treatment compositions comprising at least glufosinate as agrochemical active ingredient.

2. Use according to Claim 1, **characterized in that** the crop-treatment composition comprises glufosinate in the form of a salt and particularly preferably the ammonium salt of glufosinate.

3. Use according to at least one of Claims 1 to 2, **characterized in that** the crop-treatment composition comprises at least one further agrochemical active ingredient in addition to glufosinate.

4. Use according to Claim 3, **characterized in that** the further agrochemical active ingredient is a water-soluble salt of a pesticide, preferably a water-soluble salt of a herbicide.

5. Use according to Claim 1, **characterized in that** the crop-treatment composition used comprises glufosinate ammonium in combination with at least one water-soluble salt of dicamba, preferably in combination with dicamba diglycolammonium, dimethylammonium, N,N-bis(3-aminopropyl)methylammonium, dimethylglucammonium and/or sodium dicamba.

6. Use according to at least one of Claims 1 to 5, **characterized in that** the crop-treatment composition comprises
a) glufosinate,
b) one or more N-alkylglucamides of the formula (I) according to Claim 1,
c) one or more polyalkylene glycol ether sulfate salts or polyalkylene glycol ether sulfonate salts,
d) water.

7. Use according to at least one of Claims 1 to 6, **characterized in that** the crop-treatment composition comprises
a) in addition to glufosinate at least one further agrochemical active ingredient, and
e) optionally one or more cosolvents selected from the group consisting of dihydric and trihydric alcohols, and
f) optionally further surfactants.

8. Use according to at least one of Claims 1 to 7, **characterized in that** the N-alkylglucamides of the formula (I) are together with the ingredients of the crop-treatment composition already incorporated into a concentrated formulation.

9. Use according to at least one of Claims 1 to 8, **characterized in that** the crop-treatment composition is present as a spray mixture.

10. Method for reducing drift during application of a crop-treatment composition, **characterized in that** an aqueous spray mixture comprising one or more N-alkylglucamides of the formula (I) according to Claim 1, at least glufosinate as agrochemical active ingredient is sprayed onto the plants to be treated or onto the site thereof, wherein the total surfactant content, based on the total amount of aqueous spray mixture, is 0.001% to 0.30% by weight and wherein the proportion of N-alkylglucamide of the formula (I), based on the total amount of surfactant in the aqueous spray mixture, amounts to 50% to 100% by weight.

11. Method according to Claim 10, **characterized in that** the crop-treatment composition comprises constituents a), b), c) and d) according to Claim 6.

12. Method for preparing an aqueous spray mixture having drift-reducing properties when applied, **characterized in that** a concentrate comprising one or more N-alkylglucamides of the formula (I) according to Claim 1, at least glufosinate as agrochemical active ingredient is diluted with water to give an aqueous spray mixture, wherein the total surfactant content of the concentrate, based on the total amount of concentrate, is 0.1% to 30% by weight, the proportion of N-alkylglucamide of the formula (I), based on the total amount of surfactant in the concentrate, amounts to 50% to 100% by weight, and wherein the total surfactant content of the aqueous spray mixture, based on the total amount of aqueous spray mixture, is 0.001% to 0.30% by weight, and the proportion of N-alkylglucamide of the formula (I), based on the total amount of surfactant in the aqueous spray mixture, amounts to 50% to 100% by weight.

## Revendications

1. Utilisation d'un ou plusieurs N-alkylglucamides de formule (I) 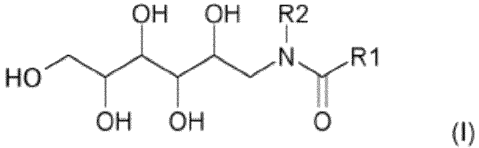 dans laquelle
R1 représente un groupe alkyle linéaire ou ramifié comportant 5 à 9 atomes de carbone, et
R2 représente un groupe alkyle comportant 1 à 3 atomes de carbone,
pour l'amoindrissement de la dérive lors de l'application d'agents de traitement de végétaux qui contiennent au moins du glufosinate en tant que principe actif agrochimique.

2. Utilisation selon la revendication 1, **caractérisée en ce que** l'agent de traitement de végétaux contient le glufosinate en tant que sel et contient particulièrement préférablement le sel d'ammonium du glufosinate.

3. Utilisation selon au moins l'une quelconque des revendications 1 et 2, **caractérisée en ce que** l'agent de traitement de végétaux contient outre le glufosinate encore au moins un principe actif agrochimique supplémentaire.

4. Utilisation selon la revendication 3, **caractérisée en ce que** le principe actif agrochimique supplémentaire est un sel soluble dans l'eau d'un pesticide, préférablement un sel soluble dans l'eau d'un herbicide.

5. Utilisation selon la revendication 1, **caractérisée en ce que** l'agent de traitement de végétaux utilisé contient du glufosinatammonium en combinaison avec au moins un sel soluble dans l'eau de dicamba, préférablement avec du dicamba-diglycolammonium, diméthylammonium, N,N-bis-(3-aminopropyl)méthylammonium, diméthylglucammonium et/ou dicamba sodique.

6. Utilisation selon au moins l'une quelconque des revendications 1 à 5, **caractérisée en ce que** l'agent de traitement de végétaux contient
a) du glufosinate
b) un ou plusieurs N-alkylglucamides de formule (I) selon la revendication 1,
c) un ou plusieurs sels de sulfate d'éther de polyalkylèneglycol ou sels de sulfonate d'éther de polyalkylèneglycol
d) de l'eau.

7. Utilisation selon au moins l'une quelconque des revendications 1 à 6, **caractérisée en ce que** l'agent de traitement de végétaux contient
a) outre du glufosinate au moins un principe actif agrochimique supplémentaire, et
e) éventuellement un ou plusieurs cosolvants choisis dans le groupe des alcools divalents ou trivalents, et
f) éventuellement d'autres tensioactifs.

8. Utilisation selon au moins l'une quelconque des revendications 1 à 7, **caractérisée en ce que** les N-alkylglucamides de formule (I) sont déjà incorporés dans une formulation concentrée conjointement avec les ingrédients de l'agent de traitement de végétaux.

9. Utilisation selon au moins l'une quelconque des revendications 1 à 8, **caractérisée en ce que** l'agent de traitement de végétaux est présent en tant que bouillon de pulvérisation.

10. Procédé d'amoindrissement de la dérive lors de l'application d'un agent de traitement de végétaux, **caractérisé en ce qu'**un bouillon de pulvérisation aqueux contenant un ou plusieurs N-alkylglucamides de formule (I) selon la revendication 1, au moins du glufosinate en tant que principe actif agrochimique est pulvérisé sur les végétaux à traiter ou sur leur site, la teneur totale en tensioactifs, par rapport à la quantité totale du bouillon de pulvérisation aqueux, étant de 0,001 à 0,30 % en poids, et la proportion du N-alkylglucamide de formule (I), par rapport à la quantité totale de tensioactifs dans le bouillon de pulvérisation aqueux, représentant 50 à 100 % en poids.

11. Procédé selon la revendication 10, **caractérisé en ce que** l'agent de traitement de végétaux contient les composants a), b), c) et d) selon la revendication 6.

12. Procédé de préparation d'un bouillon de pulvérisation aqueux doté de propriétés de réduction de la dérive lors de son application, **caractérisé en ce qu'**un concentré contenant un ou plusieurs N-alkylglucamides de formule (I) selon la revendication 1, au moins du glufosinate en tant que principe actif agrochimique est dilué avec de l'eau pour donner un bouillon de pulvérisation aqueux, la teneur totale en tensioactifs du concentré, par rapport à la quantité totale du concentré, étant de 0,1 à 30 % en poids, la proportion du N-alkylglucamide de formule (I), par rapport à la quantité totale de tensioactifs dans le concentré, représentant 50 à 100 % en poids, et la teneur totale en tensioactifs du bouillon de pulvérisation aqueux, par rapport à la quantité totale du bouillon de pulvérisation aqueux, étant de 0,001 à 0,30 % en poids, et la proportion du N-alkylglucamide de formule (I), par rapport à la quantité totale de tensioactifs dans le bouillon de pulvérisation aqueux, représentant 50 à 100 % en poids.
